# EUROPEAN PATENT APPLICATION

(11) **EP 1 464 958 A2**
(43) Date of publication of application: **06.10.2004**
(21) Application number: 04007734.9
(22) Date of filing: 31.03.2004
(51) Int. Cl.: G01N 29/08

(54) **Method and equipment for the automatic inspection of flat materials (sheets)**

(30) Priority: 31.03.2003 PT 10293403
(71) Applicant: IPN Instituto Pedro Nunes- Associaçäo para a Inovaçäo e Desenvolvimento da Ciência e Tecnologia, 3030-199 Coimbra (PT)
(72) Inventor: Mouta Dias, Joao Paulo, 3020-114 Coimbra (PT); Sergio de Jesus, Engracia Cristina, 3000-184 Coimbra (PT); Dos Santos, Jaime Batista, 3030-250 Coimbra (PT)
(74) Representative: Pereira da Cruz, Joao

(57) **Abstract**

The present invention refers to a method and automatic inspection equipment of flat materials (boards), with a regular shape, homogeneous structure, low thickness and flat surface, as long as the material allows the propagation of ultrasonic signals.

The invention allows characterising in real time the product or material to be inspected, by its implementation in a productive line without changing the previous processing times. The inspection procedure is based on the ultrasonic signals propagation technology along the surface in analysis, allowing the detection of defaults present on the surface and in the interior, through the signs processing, analysing the amplitude variation of the received signals.

The system was particularly developed for the analysis of ceramic materials, under the form of floor tiles or wall tiles, but may be adapted to any material that has the previously mentioned characteristics.

## Description

### Invention Field

The invention refers to an equipment and ultrasonic inspection method to control the quality of flat materials (boards), with a regular shape, homogeneous structure, low thickness and flat surface, as long as they allow the propagation of ultrasonic signals, referring especially to its application incorporated in productive processes, with an automatic way of functioning, and to the use of inspection technology through propagation of ultrasounds, that has as principle the measurement of the signal's amplitude variation propagated along an analysis surface, and its comparison with the previously established values.

### Description of the prior art

The existing solutions to detect defaults in the industrial production line of boards, with a regular shape, homogeneous structure, low thickness and flat surface, are centred in visual methods: laser inspection for dimensional and geometric control, and human visual inspection for superficial defaults.

These methods don't have the necessary reach or reproductability for an industrialised productive process and they limit the detection of exteriorly visible defaults.

At the level of non-destructive testing techniques to detect internal defaults, are highlighted the X-ray and ultrasounds inspection techniques.

The detection in production line without changes in the normal processing times and without forcing other substantial changes in the production line, using the X-rays technique, becomes impracticable, because it demands strong isolation conditions of the emitted radiation.

The ultrasounds propagation inspection techniques known refer to a detection method where the analysis is made according to the ultrasonic signal propagation time measurement along the material, namely reporting to the patent US 4201093, that describes a device where the ultrasonic signal is emitted along a board in the form of a sheet, and, through the measurement of the time that is takes to cover the distance between the transmitter and the receiver, it analyses the material in test.

On this invention, the transmission of the ultrasonic signals to the product to be inspected is, like in other known inventions - patent US 3257843 and patent US3628375 - made through a rolling transducer with a cylindrical format, so that it constitutes a continuous way of transmission along the board. Both transducers, of emission and of reception, are constituted by an ultrasonic sensor immersed in a fluid and with the possibility of incidence angle orientation.

The use of ultrasonic technology for inspection of flat materials (boards), with a regular shape, homogeneous structure, low thickness and flat surface, through the measurement of the signal's amplitude variation, is a novelty present in this invention, as it isn't reported any device or process of the kind that uses the same measurement method.

It is also a novelty the fact that the present method and equipment foresees a semi-automatic adjustment device of positioning that allows, according to previous parameters, adapting the inspection system to the several dimensions of the products to be inspected, either in ranges of width or length, or of thickness.

The previous inspection methods, mentioned in the quoted patents, don't refer the rotation possibility of the product to be inspected, as a method to detect defaults, that under the form of fissures may present preferable orientations on a direction parallel to the ultrasonic signal propagation direction.

The present invention adapts a rotation device that allows the rotation of 90° of the product in movement, that is, while it follows its normal path in the production line.

Other specification of the present invention, not mentioned in previous inventions, alludes to its capacity of decision and rejection of the products identified as defective, through a procedure of taking a decision, associated to a mechanical device of real time automatic rejection of those products.

The information treatment process that indicates in real time the state of the system - number of inspected products, number of products that were identified as not being in conformity, rejection rate, and type of product in line; it is an element that distinguishes the present method, as it allows accompanying in real time the product's quality parameters.

The same process controls the transducers' positioning according to the type of product to be inspected and calculates the faults' rate of the products in line, being able to activate at a certain moment a visual alarm signal. This visual interface isn't described in any of the previous systems found, but it reveals itself to be of great importance when in an industrial environment context, either for the easiness of interpretation by any worker, either for the way of automatic control of its functions.

### Summary of the invention

The invention refers to an equipment and method, designed to detect the defaults in flat materials (boards), with a regular shape, homogeneous structure, low thickness and flat surface, through the application of ultrasonic signals propagation technology, being based on the measurement of signal amplitude variation, when it is propagated along materials that indicate the presence of defaults in areas of different morphology.

By being implemented in the productive process, the method and equipment allows detecting in real time the presence of in-line defaults, being that information able to be useful as redraft, and conducing to the fast correction of the factors that may be causing the defaults. Such information is precious when used as a Quality Control tool, as it allows, in industrial terms, a great economy of means and resources.

The decision feature device, based in terms comparative to reference values, that decides about the classification of the default, associates the information to a mechanical device, which automatically rejects the products that were identified as not being in conformity.

The tuning of the detection levels, associated with the different materials and formats to be inspected, is made through a manual regulation, with values obtained by previous calibration, and that are dependent on several factors, such as: the dimensions, the material and also the quality pattern expected for the product.

Structurally, the equipment is composed of a base table that serves as support to the traction system of the products or materials' transport line; two fix bridges, that support the positioning mechanisms of both the emission/reception sets; and an interpolated mechanism that causes the 90° rotation in movement of the products in line.

The semi-automatic positioning mechanisms of the mechanical elements that sustain the emission/reception systems allow adapting the equipment to the inspection of several formats of materials, with a parameters adjustment time quite fast and prompt.

The rotation mechanical device of the products located between the two emission/reception systems allows changing the direction of the inspection made by the first emission/reception system, towards its perpendicular, during the passage to the second emission/reception system, so that it can ensure the detection of cracks that have a direction parallel to the signal's propagation direction.

It is also part of the equipment an information treatment process with visual interface, that shows in real time the number of inspected products, the number of products that were identified as not being in conformity, rejection rate and the type of product in line.

The rolling transducer, that lodges the ultrasonic sensor immersed in a fluid, and with a manual device that adjusts the signal's incidence angle on the testing surface, is composed of a cylinder wrapped in a silicon ring as an elastic way of contact with the analysis surface.

For the excitation of the transducers, the equipment has electric signs of high voltage generators in the form of pulses with frequency adjusted to the transducers' central frequency. The electric excitation applied to the transducer is converted by it in mechanic (acoustic) waves, which propagate themselves along the environment under inspection, being later captured by another sensor, properly put to receive the acoustic signs, which will be converted again in electric signs.

The signals coming from the propagation of the ultrasonic waves in the materials are usually of low amplitude. Therefore, signal amplifiers are used to lead the amplitude of the received signs to values compatible with the hardware. Once amplified, the signs are digitalised and sent to a computer to be processed.

### Brief description of the drawings

The following description refers to the attached drawings presented without any limitative character. On the mentioned drawings the figures represent:
FIG 1. Schematic drawing of the equipment, with the representation of the block diagram associated to its functioning.
FIG 2. Frontal view of the equipment, with a highlight for the visualisation of the transducers' positioning mechanisms.
FIG 3. Side view of the equipment, with a highlight for the products' rotation device.
FIG 4. Electronic scheme of the decision feature process of the type accept-reject.
FIG 5. Interface with the user
FIG 6. Schematic drawing of the transducers

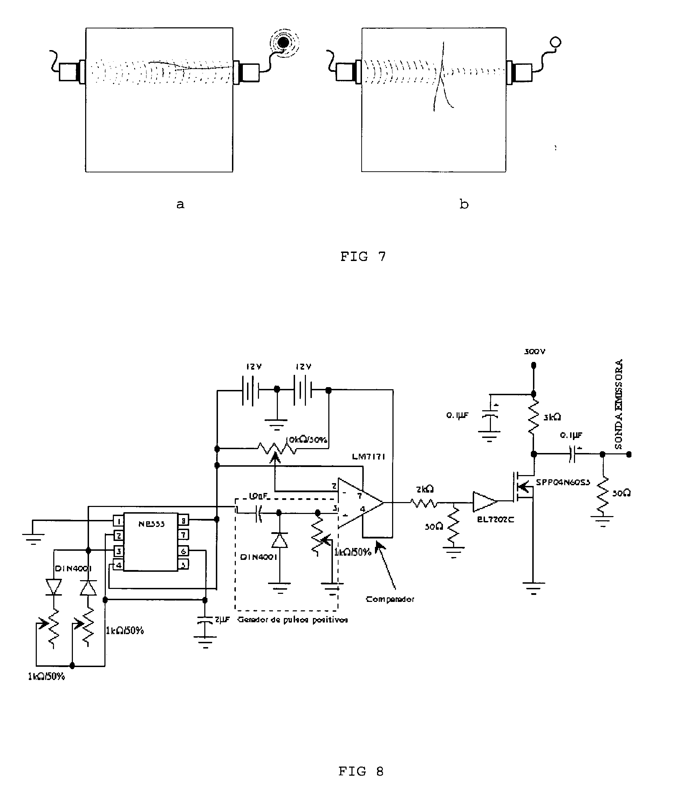

FIG 7. Schematic drawing of the defaults' detection method of the crack type, parallel to the propagation direction of the ultrasonic signal (a) Tile with a non-detected crack; (b) Tile with a detected crack.
FIG 8. Signals' generator
Fig 9. Amplifying circuit
FIG 10. TTL circuit of detection and wrapping of the fault
FIG 11. Flow charts: a) subsystem 1; b) subsystem 2
FIG 12. Flow chart illustrating the rejection process

### Detailed description of the invention

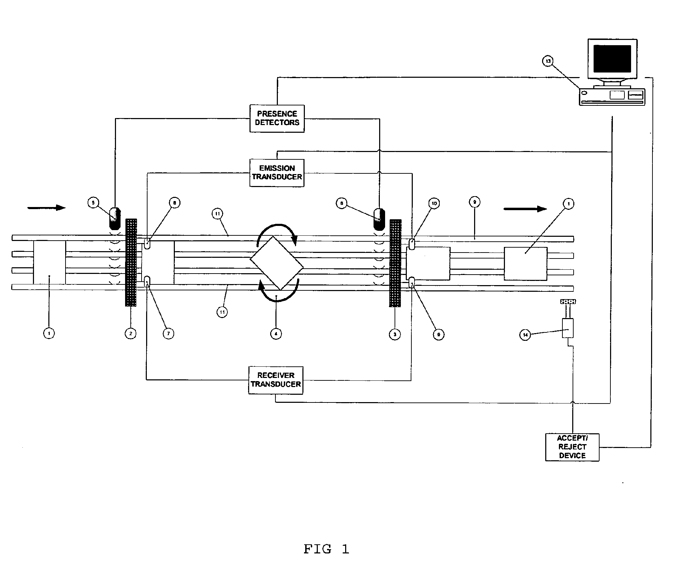

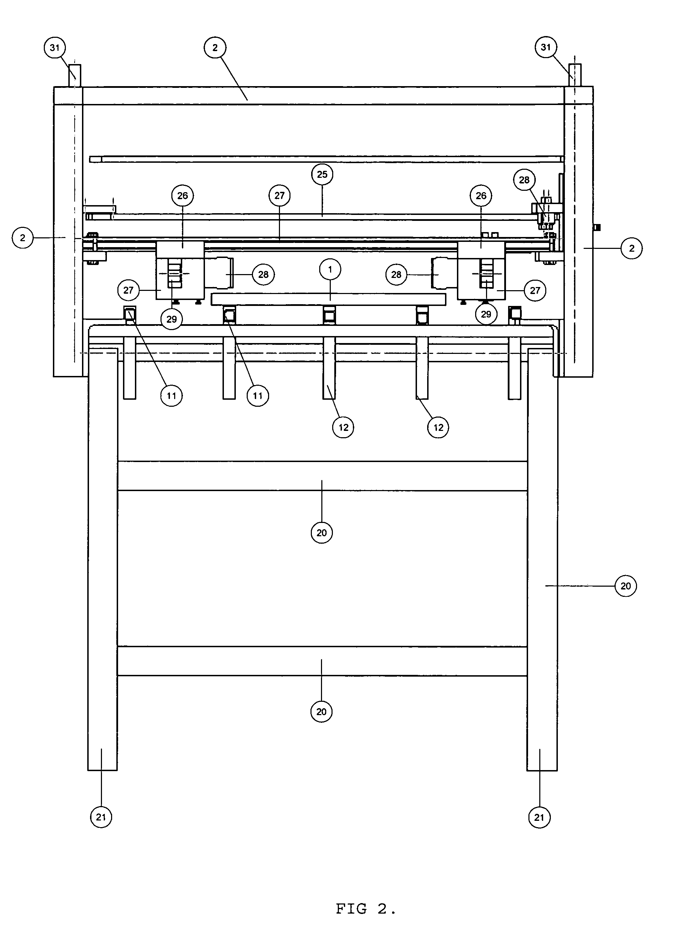

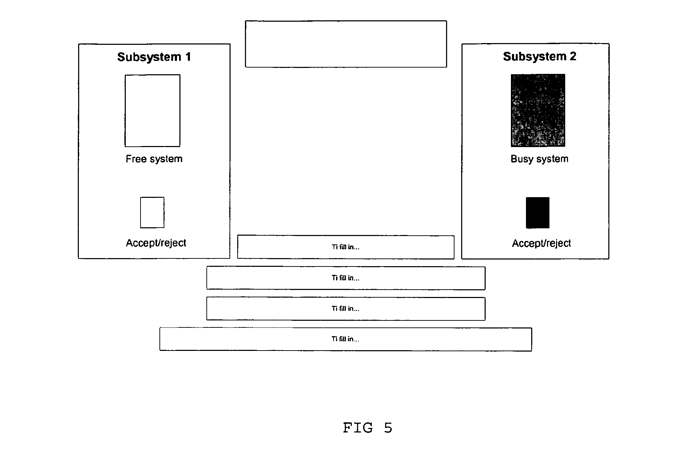

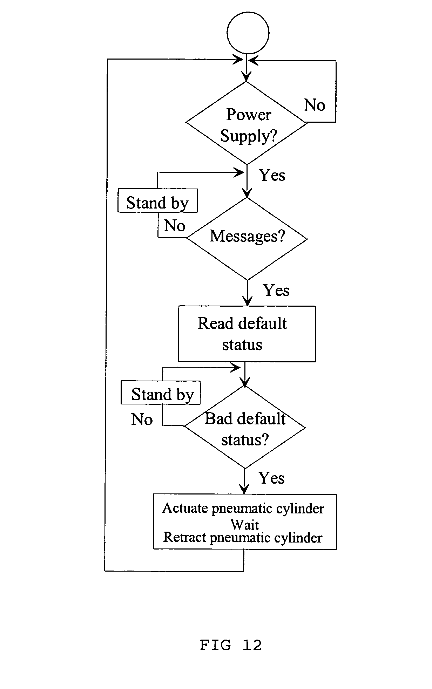

As it is presented on FIGURE 1, the product 1 to be tested in a production line follows its normal path, without interferences or interruptions, over a set of transporters driving-belts 11, pulled by pulleys - FIGURE 2, 12 - moved with electric motors. This way of traction may be of any kind, as long as it gives a continuous movement and a constant velocity. In the sequence of that movement, the first presence detector 5 detects the entering of the testing body 1 in the first bridge 2, where it is going to be analysed according to the parallel direction of its movement. The defaults' analysis happens through the emission of a ultrasonic signal by the transmitter 7 and received by the receiver 8. This process is continuous, being the frequency of the pulses calculated in function of the testing body velocity passage. The collected signal will be processed at the level of the data acquisition plaque on the control computer 13, which processes the information and produces the visual output for the operator, as it is shown in FIGURE 5.

In the rotation in movement device 4, the product 1 is rotated 90° and, after passing through a new presence detector 6, it enters the second bridge 3, where it is going to be analysed in the direction perpendicular to the previous one. The procedure is equivalent to the first phase of the analysis, being that the ultrasonic signal emitted by the transmitter 9 crosses the material and it's received by the receiver 10, whose reading is sent to the computer 13 and the information is processed, giving rise to a visual output (FIGURE 5).

On the sequence of the movement, the product 1 is located in the selection area where the acceptance/rejection device 14 ends the defaults' detection operation, excluding from the system the products that are identified as not being in conformity. The information was processed, visualised and stored to be used in this phase, according to a procedure schematised in the flow chart of

### FIGURE 12.

As it can be seen on FIGURE 5, that represents the format and presentation of the computer's visual interface with the operator, this interface has two windows, which represent the two inspection systems. With lightening signals and associated colours, it is signalised the entry of a testing body in the system, and in the same window it is indicated the state of conformity or not of the product. In the lower bars there is a counter that indicates how many products were inspected, how many were identified as not being in conformity and the calculated faults rate.

### Presence Detectors

The optical switched 5 and 6 - FIGURE 1 - allow detecting the presence of objects. These switches present an exit with a +Vcc value when there is an object in its detection field. The detection field of such sensors has a width of 0,05mm and the detection range varies between 2,5 and 8mm. Once the switch 5 is activated, the signal is sent to the computer 13. That information is necessary, since the system only processes another inspection if an object is detected in the system. The same thing happens when the sensor 6 detects the exit of the testing body. In that circumstances the system knows that the object has already been inspected. This information is also important to visualise the system's state, to count the operations and also to digitally identify the testing body.

### Selection Device

Alluding to FIGURE 2, that presents a frontal view of the equipment, it is referenced the supporting structure of all system 20, equipped with anti-vibration feet 21, and of adjustable height, to allow its implementation in different production lines within a certain range. All the structure is built with steel profiles, rigidly linked through soldered joints.

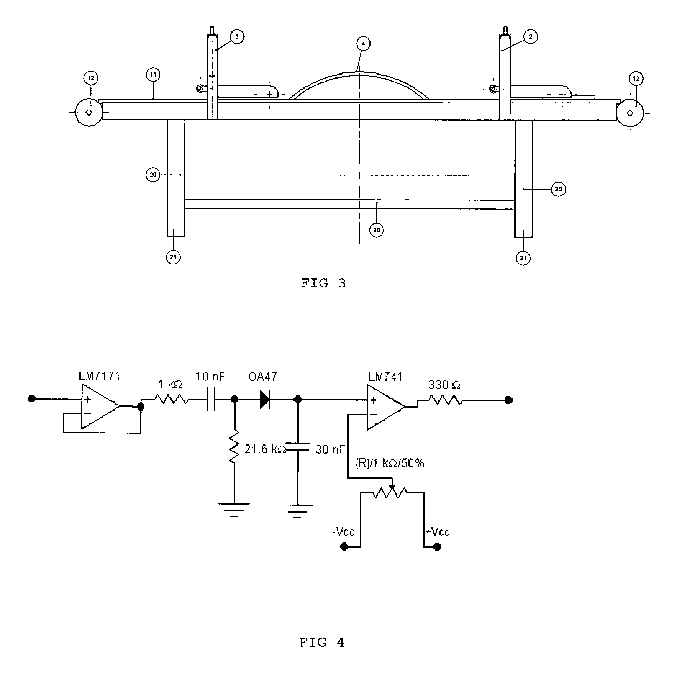

Lodged in this structure are the two fixing bridges of the positioning mechanisms 2 and 3, which are exactly alike and constituted by the same elements. They are positioned close to the extremities and at a distance long enough to allow the correct motion of the testing bodies from an inspection system to another, passing by the rotation mechanism 4, positioned in the central part of the equipment. This arrangement is visualised on FIGURE 3, side view of the equipment.

### Positioning mechanisms

Equipped with a system that allows positioning the transducers according to the sizes and formats of the products to be inspected, this system is composed of a by-belt transmission 25 that tractions two cars 26 that slide over a linear guide 27, so that they move simultaneously, positioning themselves at the correct distance that corresponds to the product's width. The motive power is a stepper motor 28 controlled by the system's Software, which has all the data control and storage functions. The motors of both bridges are simultaneously activated, but don't necessarily have the same movement, as the testing body may not have the same width after being rotated 90°. The positioning mechanism is activated only when a change in the type of products to be inspected happens, and when the equipment is started and shut down.

The vertical positioning is promoted by a mechanism of two endless-screws 31 that sustain the entire horizontal positioning system, which, on its turn, sustains the transducers. These screws are simultaneously activated to raise or lower all the set, adjusting the emission/reception inspection device to the product to be analysed. This mechanism may be visualised on FIGURE 2.

### Transducers Support

On FIGURE 2 it may be seen the device that serves as support to the transducers: fixed to the cars 26 are a support devices 27 that are the transducers' sustenance base 28. These supports 27 fit in a claw 29, which fixes the transducer 28, allowing it a freedom degree in the movement, so that these may adapt themselves to the entry of the testing body. When a product enters the system, there is an impact that is minimised by this adjustment between the transducers and its support. Claw 29 is linked to a compression spring that benumbs that impact.

### Transducers

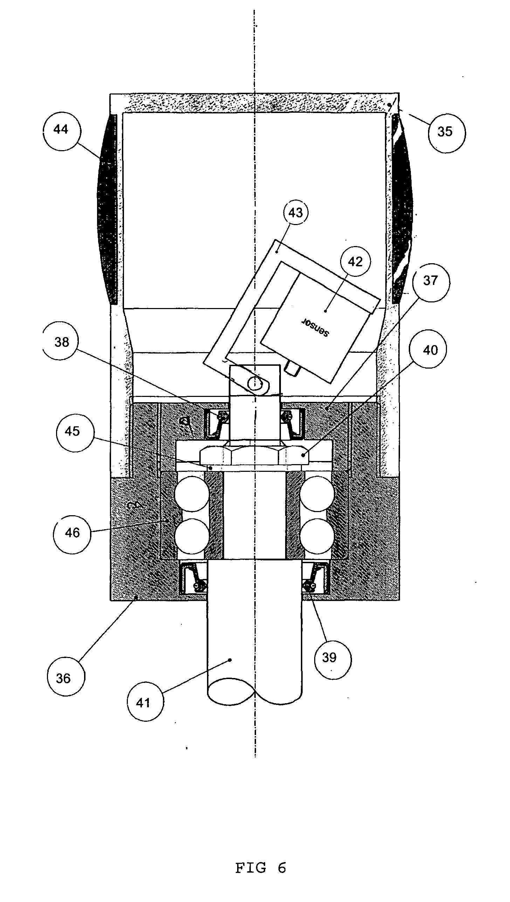

Alluding to FIGURE 6, it may be visualised the transducer, which is composed of a Stainless Steel cylindrical body 35 that, spiralled on caps 36 and 37, forms a hermetic cavity. The cavity is filled by a fluid, to transmit the ultrasonic signals emitted by the ultrasonic sensor. The ultrasonic sensor 42 fits in its support 43, and this fixes on the shaft 41, to allow its manual rotation to adjust the incidence angle of the ultrasonic signal on the surface.

The shaft 41 is fixed on the claw 29, described on FIGURE 2. The shaft - cylinder coupling allows keeping the ultrasonic sensor fixed on a same position, while the cylinder and tap rotate jointly liable with the linear movement of the product to be inspected. This coupling is made through a row ball-bearing double carrier 46, tightened with the fixing nut 40 and washer 45, being the sealing ensured by the seal materials 38 and 39. The silicone ring 44 that wraps the cylinder in the contact area serves to allow a smooth adjustment with the surface in analysis, through an elastic and resistant material.

### Signals Generator

The signal generator was projected with the aim of giving a signal of high amplitude and power. Thus, we passed from a pulse generator of the "spike" type for a square pulse generator. An adequate adaptation of the signal's frequency to the transducer's frequency (1,5 MHz), as well as a good adaptation of impedances allowed improving the transmitted signal. FIGURE 8 shows a schematic representation of the mentioned generator, doubly developed to give an independent feeding of the two "Rollers" systems.

### Signals amplifier

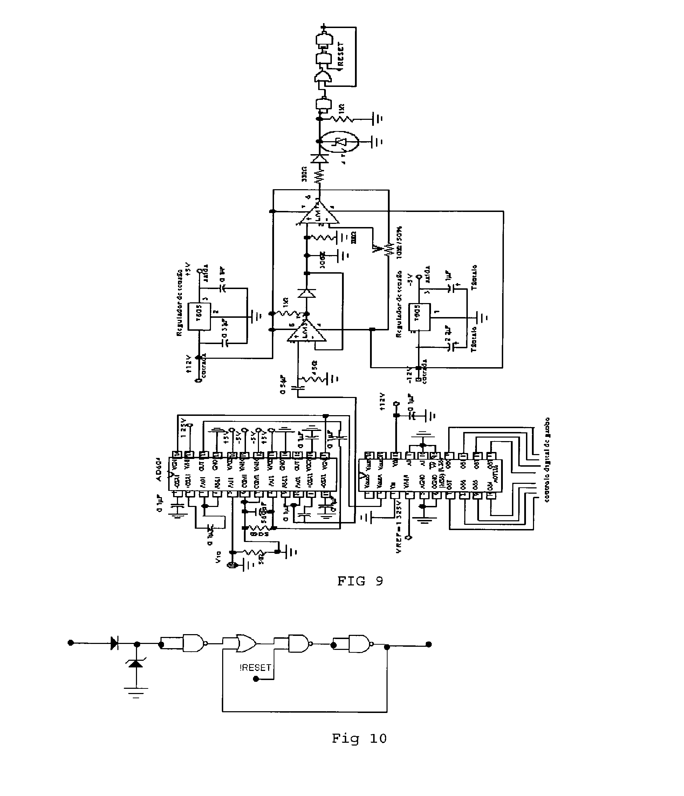

FIGURE 9 illustrates in a schematic way the amplifier used in accordance with the need to amplify the received signals to values acceptable for that application. The amplifier gain can be programmed in a range 0 - 96 dB.

### Signals acquisition

The defaults' analysis and detection procedure that is used in the present invention is based on the checking of the existence or absence of ultrasonic waves' propagation in the materials under inspection. For that, it is used a comparison method between the amplitude of the received signal in each instant and the reference amplitude previously defined. This comparison task is performed through the integration of a pick detector followed by a comparator, just after the signal amplification module proposed for each one of the two inspection systems, as it is show on FIGURE 4.

The use of the present circuit reduces the sampling frequency necessary to the acquisition of the signal, as now there are steps with an amplitude corresponding to the pick's value of the received signal, that vary at a frequency of 1KHz (sounds' excitation frequency).

It was defined that a product is considered as having a default every time that the received amplitude is inferior to a reference amplitude. In this way, since the output of the comparison module is +Vcc or -Vcc, corresponding the +Vcc to the non-existence of fault and the -Vcc to the existence of a fault, we may use a logic circuit that detects the occurrence of at least a zero. It was introduced a zener diode of 4,7V in output of comparison module, conducing to two logic levels for each one of the possible states of the tile in each one of its points, that is, *logic level 0* if there is a fault and *logic level 1* if there isn't a fault, being implemented a TTL logic circuit that, during the presence of a testing body in each one of the inspection systems, allows the detection and conditioning of a logic level 0 correspondent to the presence of at least one fault. It is shown on FIGURE 10 the logic circuit implemented.

### Decision feature software

The software developed for this automatic inspection system allows taking a decision of the type accept/reject, as a result of the information coming from the ultrasonic transducers. In a very simple way, the absence of signal in the receiver ultrasonic sensor (below the predefined threshold) indicates the presence of defects in the tested products, while, if it is verified an amplitude signal superior to a certain threshold, it is an indicator of good state of the product. In these circumstances, the product carries on to the next phase of the process. If the existence of defects is verified, the product is rejected by a selection device implemented at the end of the inspection process.

The software is also able to control the transducers position by actuating stepper motors, in accordance with the previously selected dimensions of the products to be inspected and to control the selection device.

The calibration of the inspection system, every time that the production of different floor or wall tiles is verified, is also performed by the software. For this, every time the program is called, it appears on the screen a user interface (FIGURE 5) that allows the selection of the type of product to be inspected next. Once this selection is made, the stepper motors are activated, positioning the tile guides in the two subsystems, according to such dimensions.

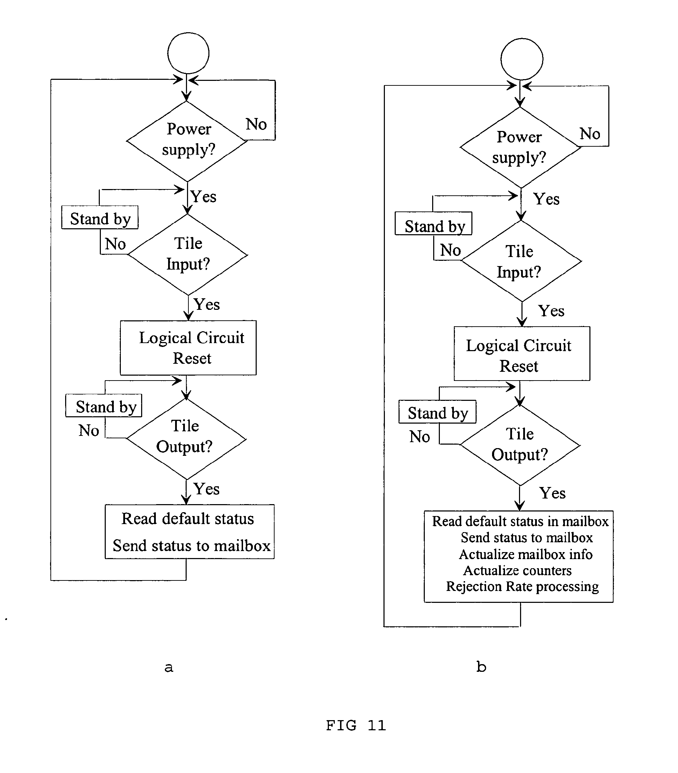

The flow charts represented on FIGURES 11 a) and b) illustrate the software functions relative to each subsystem.

## Claims

1. A method of automatic inspection of flat materials (boards), with a regular shape, homogeneous structure, low thickness and flat surface, as long as it allows the propagation of ultrasonic signals, to detect the presence of defaults on the surface and in the interior, that uses the propagation of ultrasonic signals emitted by a rolling transducer, **characterised by**:
- Using the ultrasonic inspection technology, based in the analysis of the received signal amplitude;
- Using a semi-automatic adjustment device of positioning that allows, according to previous parameters, adapting the inspection system to the several dimensions of the products to be inspected, either in ranges of width or length, or of thickness;
- Allowing the detection of defaults that, under the form of cracks, may present preferential orientations in a certain direction parallel to the ultrasonic signal's propagation;
- Presenting the decision and rejection capacity of the products identified as defective;
- Being endowed with an information treatment process that indicates in real time the system's state, allowing accompanying in real time the product's quality parameters; and
- Presenting a visual interface with the operator that enables the automatic control of its functions.

2. An automatic inspection method of flat materials, according to the previous claim, **characterised by** making the counting and calculation of the faults' rate associated to the great series of products and also the use of that information to control the quality and also alarm functions.

3. An automatic inspection method of flat materials, according to claim 1, **characterised by** the capacity of decision and rejection of the products identified as defective being associated to a taking a decision device, which decides about the default's classification, associates the information to a mechanical device that automatically rejects the products that were identified as not being in conformity.

4. Automatic inspection equipment of flat materials (boards), with a regular shape, homogeneous structure, low thickness and flat surface, if the material allows the propagation of ultrasonic signals, to perform the method defined in the claims 1 to 3, **characterised by** being composed of:
- A structure constituted by a base table that serves as support to the traction system of the products and materials transport line;
- Two fix bridges that support the positioning mechanisms of two emission/reception sets;
- Two emission/reception sets, structurally similar;
- Presence detectors to allow detecting the entry and exit of a probe material in the inspection area;
- An interposed mechanism that causes the 90° rotation in movement of the products in line;
- Materials' sorting and separation device; and
- An interface device.

5. An equipment, in accordance with claim 4, **characterised by** the fact that each inspection set has two support mechanisms put opposite, a mechanism of traction of the support mechanisms, an elevation device of the two previous mechanisms, and also a presence detector.

6. An equipment, in accordance with claims 4 and 5, **characterised by** combining into a whole a traction mechanism that performs the semi-automatic horizontal positioning of the support mechanism present in each one of the inspection sets, allowing adjusting the distance between the support mechanisms, according to the product that we want to inspect.

7. An equipment, in accordance with claim 6, **characterised by** the fact that each one of the traction mechanisms has an independent movement, that allows adjusting the distances between the support mechanisms present in one of the inspection sets different from those adjusted by the support mechanisms present in the other inspection set, thus allowing the materials' analysis with a square or rectangular shape.

8. An equipment, in accordance with claim 5, **characterised by** the fact that the elevation device allows the vertical positioning of the support mechanisms, of the traction mechanism and also of the presence sensor, so that it adjusts the inspection to the thickness of the material to be inspected.

9. An equipment, in accordance with claim 4, **characterised by** the fact that the presence sensors that allow detecting the entry and exit of a material in the inspection area are diffused optical switches.

10. An equipment, in accordance with claim 4, **characterised by** the fact that it uses rolling transducers, put on the support mechanisms, and lodging ultrasonic sensors to propagate the ultrasonic signals.

11. An equipment, in accordance with claims 4 and 10, where the support mechanisms are **characterised by** the fact that they allow the rolling transducers to act along the entire analysis area to detect defaults present on the surface and in the interior of the materials.

12. An equipment, in accordance with claims 4 and 10, **characterised by** the fact that it uses, for each inspection set, a pair of rolling transducers lodging ultrasonic sensors, one functioning as transmitter and the other as receiver of the ultrasonic signal.

13. An equipment, in accordance with claims 4 and 12, where the defaults' detection is made through the analysis of the amplitude variation of the received signal.

14. An equipment, in accordance with claim 4, **characterised by** the fact that it integrates a rotation mechanism of 90° of the material, with the aim of securing the detection of faults in the shape of cracks, in positions parallel to the direction of the ultrasonic signal propagation.

15. An equipment, in accordance with claim 4, **characterised by** the fact that it integrates an accept/reject decision device, according to the detected defaults classification by comparison with reference values for each analysed material and format.

16. An equipment, in accordance with claims 4 and 15, **characterised by** the fact that it integrates an exclusion device of the production line of the materials identified as not being in conformity, through the activation of a pneumatic cylinder.

17. An equipment, in accordance with claim 4, **characterised by** the fact that it integrates a device of interface with the user, which allows him to define the parameters that characterise the material when the inspection is being prepared and to screen the inspection course.

18. An equipment, in accordance with claim 4, **characterised by** the fact that it includes a control system of the devices described in these claims, and data communication between those devices.

19. An equipment, in accordance with the previous claims, **characterised by** the fact that it allows analysing in real time the product or material to be inspected, through its implementation in a productive line without changes in the previous processing times.
